# EUROPÄISCHE PATENTSCHRIFT

(11) **EP 1 194 263 B1**
(45) Veröffentlichungstag und Bekanntmachung des Hinweises auf die Patenterteilung: **17.11.2004**
(21) Anmeldenummer: 00943738.5
(22) Anmeldetag: 25.05.2000
(51) Int. Cl.: B23K 35/363, C23C 20/02

(54) **Verfahren zur Herstellung von mit Aluminium-Silicium-Legierung beschichteten Bauteilen**
Process for the production of components coated with an aluminium-silicon alloy
Procédé de production de composants revetus d'un alliage d'aluminium-silicium

(30) Priorität: 02.06.1999 DE 19925301
(43) Veröffentlichungstag der Anmeldung: 10.04.2002
(60) Teilanmeldung: 04013767.1
(73) Patentinhaber: Solvay Fluor und Derivate GmbH, 30173 Hannover (DE)
(72) Erfinder: SESEKE-KOYRO, Ulrich, 30916 Isernhagen (DE); FREHSE, Joachim, D-30625 Hannover (DE); BECKER, Andreas, D-29331 Lachendorf (DE)
(74) Vertreter: Fischer, Reiner
(86) Internationale Anmeldenummer: PCT/EP2000/004777
(87) Internationale Veröffentlichungsnummer: WO 2000/073014

(56) Entgegenhaltungen:
- EP-A- 0 810 057
- DE-A- 19 636 897
- DE-A- 19 913 111
- GB-A- 2 339 161
- JP-A- 63 002 590
- US-A- 4 906 307
- PATENT ABSTRACTS OF JAPAN vol. 1997, no. 02, 28. Februar 1997 (1997-02-28) & JP 08 267229 A (KAWAKATSU ICHIRO), 15. Oktober 1996 (1996-10-15)

## Beschreibung

Die Erfindung bezieht sich auf ein Verfahren zur Abscheidung einer Aluminium-Silicium-Legierung auf Aluminium oder Aluminiumlegierungen.

Techniken zum Verlöten von Bauteilen aus Aluminium oder Aluminiumlegierungen sind bekannt. Die Bauteile werden unter Zuhilfenahme eines Lotmetalls und eines Flußmittels unter Erhitzen miteinander verbunden. Dabei kann man das Lotmetall entweder separat zusetzen oder man kann mit Lotmetall plattierte Bauteile einsetzen. Als Flußmittel werden bevorzugt Kaliumfluoraluminate und/oder Cäsiumfluoraluminate eingesetzt.

Das US-Patent 4,906,307 offenbart ein Verfahren zum Verlöten von Bauteilen aus Aluminiumlegierung. Dabei werden lotplattierte Bauteile mit einem Flußmittel aus 70 bis 90 Gew.-% Kaliumhexafluorsilikat und 30 bis 10 Gew.-% Aluminiumtrifluorid, unter Zusatz von Lithiumfluorid und Natriumfluorid eingesetzt. Die europäische Patentanmeldung EP-A-0 810 057 offenbart Flußmittel zum Aluminiumlöten, die bis zu 20 Gew.-% eines Metallfluorsilikats (neben einem Fluoraluminatkomplex, beispielsweise Kaliumtetrafluoraluminat) aufweisen können. Mit bestimmten Alkalimetallfluorsilikaten in bestimmten Gewichtsbereichen ist auch lotfreies Löten möglich.

Die deutsche Patentanmeldung 196 36 897 offenbart, daß man Aluminiumbauteile lotfrei miteinander verlöten kann, sofern man ein Flußmittel verwendet, welches 6 bis 50 Gew.-% Kaliumhexafluorsilikat und weiterhin Kaliumfluoraluminat enthält.

Aufgabe der vorliegenden Erfindung ist es, ein Verfahren anzugeben, mit welchem sich eine Aluminium-Silicium-Legierung auf Aluminium oder Aluminiumlegierungen (bzw. entsprechenden Bauteilen) aufbringen läßt, ohne daß eine Plattierung durch Aufwalzen eines Lotmetalls notwendig wäre.

Das erfindungsgemäße Verfahren zur Herstellung von Aluminium oder einer Aluminiumlegierung mit einer Beschichtung, welche eine Aluminium-Silicium-Legierung aufweist, sieht vor, daß man Aluminium oder eine Aluminiumlegierung mit Alkalimetallhexafluorsilikat beschichtet und erhitzt, bis sich die Aluminium-Silicium-Legierung ausbildet. Die Erfindung ist in Anspruch 1 definiert.

Bevorzugte Alkalimetallhexafluorsilikate sind Kaliumhexafluorsilikat, Cäsiumhexafluorsilikat oder deren Gemische, ganz besonders Kaliumhexafluorsilikat.

Es ist besonders bevorzugt, das Alkalimetallfluorsilikat mit einem Flächengewicht von 30 bis 60 g/m² aufzubringen. Dies kann beispielsweise durch elektrostatische Aufbringung des trockenen Hexafluorsilikat-Pulvers oder aus wäßriger Phase (Lösung oder Suspension des Silikats) erfolgen. Bei geringeren Flächengewichten ergibt sich eine dünnere, bei höheren Flächengewichten eine dickere Legierungsschicht. Legierungsbildung zum Verbinden von Bauteilen tritt bereits bei Flächengewichten ab 5 g/m² auf. Für die meisten Anwendungen zeigt sich ein Flächengewicht von mindestens 20 g/m² bis 60 g/m² vorteilhafter, weil dann entsprechend mehr Legierungsmetall für eine stabile Verlötung (stärkere Lotnaht) des Ensembles bereitgestellt werden kann.

Dabei wird es in Form einer Aufschlämmung in Wasser oder in organischen Lösungsmitteln oder auch als Paste auf die verbindenden Werkstoffe aufgebracht. Diese Aufschlämmungen enthalten zweckmäßig 15 bis 75 Gew.-% des Hexafluorsilikats. Außer Wasser werden auch organische Flüssigkeiten, insbesondere Alkohole, wie Methanol, Äthanol, Propanol oder Isopropanol, oder Polyole eingesetzt. Andere organische Flüssigkeiten, die verwendet werden können, sind Äther, z.B. Diäthylenglykolmonobutyläther, Ketone wie Aceton, Ester von einbasigen Alkoholen, Diolen oder Polyolen. Binder für die Anwendung als Paste ist beispielsweise Ethylcellulose. Mittels Filmbildnern, gewöhnlich handelt es sich um Polymere, die in organischen Lösemitteln wie Aceton löslich sind, kann den Hexafluorsilikat auf das Bauteil aufgebracht werden. Sie ergeben nach dem Verdampfen des Lösemittels einen fest haftenden Film. Geeignete Polymere sind beispielsweise Acrylate oder Methacrylate.

Material mit einem feinteiligen Kornspektrum ist besonders gut für die Naßbefluxung geeignet. Material mit einem gröberen Kornspektrum ist besonders gut für die Trockenbefluxung geeignet. Material mit gewünscht feinem bzw. gröberem Kornspektrum kann nach bekannten Methoden erzeugt werden. Üblicherweise setzt man Alkalilauge mit Hexafluorokieselsäure ein (Vorläufer sind auch brauchbar, z. B. Alkalicarbonat). Es ist allgemein bekannt, wie die Korngröße zu beeinflussen ist. Kleinere Kristalle entstehen bei niedriger Reaktionstemperatur, schneller Reaktion, schneller Trocknung und starker Bewegung der Reaktionsmischung. Größere Kristalle entstehen bei höherer Temperatur, Stehenlassen über der Mutterlauge, geringer Bewegung der Reaktionsmischung und langsamer Vermischung der Reaktanten.

Hexafluorsilikat bzw. diese enthaltende Gemische, die im wesentlichen Partikel in einer Korngröße von 8 bis unter 20 µm, z. B. bis zu 18 µm aufweisen, sind sehr gut zur Trokkenbefluxung brauchbar. So konnte K₂SiF₆ mit X_{D10} = 2,04 µm, X_{D50} = 6,94 µm und X_{D90} = 12,35 µm und einem mittleren Korndurchmesser von 6,94 µm erzeugt werden. Ein anderes Produkt war noch feiner, mit einer X_{D50} von 4,6 µm. Diese Korngrößenangabe bezieht sich auf den mittleren Korndurchmesser für 50 % der Teilchen (X_{D50}), bestimmt durch Laserbeugung. Flußmittel, welche im wesentlichen Partikel in einem Korngrößenbereich von 1 bis 12,5 µm aufweisen, sind als Aufschlämmung in Wasser oder organischen Flüssigkeiten besonders gut nach dem Naßbefluxungsverfahren aufbringbar.

Bevorzugt erhitzt man das Aluminium oder die Aluminiumlegierung auf eine Temperatur im Bereich von 400 bis 61.0 °C, vorzugsweise 540 bis 610 °C, um die Aluminium-Silicium-Legierung auszubilden. Bei Verwendung von Kaliumhexafluorsilikat erhitzt man vorzugsweise auf eine Temperatur im Bereich von 570 bis 600 °C.

Dabei kann man das Beschichten und Verlöten in einem Arbeitsgang durchführen. Es bildet sich zunächst die Legierung aus, dann erfolgt das Verlöten. Es ist auch möglich, das Beschichten und Löten zeitlich zu trennen. Die Bauteile werden zunächst beschichtet. Dann läßt man sie üblicherweise abkühlen und bewahrt sie auf, bis unter erneutem Erhitzen die Verlötung erfolgt. Beschichten und Verlöten können hier natürlich auch räumlich getrennt sein. Das Verfahren ist deshalb sehr flexibel.

Es wurde festgestellt, daß Bauteile aus Aluminium oder Aluminiumlegierungen, die erfindungsgemäß mit einer Aluminium-Silicium-Legierung beschichtet sind, ohne Lotzusatz verlötet werden können, beispielsweise nach der Methode des Flammlötens oder des Ofenlötens, sofern zwischen Aufbringen der Beschichtung und dem Verlöten nicht so viel Zeit vergangen ist, daß es zu einer Alterung der Oberfläche der zu verlötenden Teile oder Stellen gekommen ist. Ist zwischen dem erfindungsgemäßen Beschichtungsverfahren und dem sich anschließenden Verlötungsverfahren eine solche Zeitspanne vergangen, daß es zu einer Alterung der Oberfläche gekommen ist, kann man ein Flußmittel, beispielsweise auf Basis von Kaliumfluoraluminat oder Cäsiumfluoraluminat, verwenden. Der Vorteil ist, daß gewünschtenfalls eine sehr niedrige Flächenbeladung mit dem Flußmittel, beispielsweise im Bereich von 2 bis 30 g/m², erfolgen kann.

Ein Flußmittel auf Fluoraluminatbasis, beispielsweise Kaliumfluoraluminat und/oder Cäsiumfluoraluminat wird gleichzeitig mit dem Alkalimetallhexafluorsilikat aufgebracht. Das Fluoraluminat liegt in einer Menge von maximal 15 Gew.-%, bezogen auf das eingesetzte Alkalimetallhexafluorsilikat, vorzugsweise in einer Menge von maximal 10 Gew.-%, insbesondere in einer Menge von maximal 5 Gew.-% vor.

Der Begriff "Bauteile aus Aluminium oder Aluminiumlegierung" steht im Rahmen der vorliegenden Erfindung für solche Bauteile, die, wenn sie nach dem erfindungsgemäßen Verfahren beschichtet sind, insbesondere durch Verlöten zu Ensembeln (Baugruppen) zusammengesetzt werden. Unter "Bauteile" werden auch Vorfabrikate verstanden, beispielsweise Aluminiumbleche, Aluminiumprofile, Aluminiumrohre oder andere Formen aus Aluminium oder Aluminiumlegierungen, die nach weiterer Bearbeitung zu Bauteilen weiterverarbeitet werden, die ihrerseits dann zu Ensembeln verlötet werden können. Beispielsweise handelt es sich um Bauteile, die nach dem Verlöten Kühler, Wärmetauscher oder Verdampfer ergeben.

Die mit dem erfindungsgemäßen Verfahren hergestellten Bauteile aus Aluminium oder Aluminiumlegierungen können, gegebenenfalls unter Zusatz eines Lötflußmittels wie Kaliumfluoraluminat, Cäsiumfluoraluminat oder deren Gemischen, verlötet werden. Dies erfolgt in an sich bekannter Weise, beispielsweise in einem Lötofen oder durch Flammenlöten bei einer Temperatur im Bereich von 400 bis 610 °C je nach Flußmittel.

Die Erfindung weist den Vorteil auf, daß die Bauteile, die nach dem erfindungsgemäßen Verfahren erhalten wurden, sofort ohne Zusatz eines Flußmittels verlötet werden können. Sofern man ein Flußmittel für später auszuführende Verlötungen zusetzt, kann man dieses mit einem niedrigen Flächengewicht aufbringen. Die neben der Legierungsschicht sich ausbildende Alkalifluoraluminatschicht schützt wirksam vor Reoxidation.

## Patentansprüche

1. Verfahren zur Herstellung von Aluminium oder einer Aluminiumlegierung mit einer Beschichtung, welche eine Aluminium-Silicium-Legierung aufweist, wobei man Aluminium oder eine Aluminiumlegierung mit einem Gemisch bestehend aus 99,5 bis 85 Gew.-% Alkalifluorsilikat und 0,5 bis 15 Gew.-% Alkalifluoraluminat beschichtet und erhitzt, bis sich die Aluminium-Silicium-Legierung ausbildet.

2. Verfahren nach Anspruch 1, **dadurch gekennzeichnet, dass** man Kaliumhexafluorsilikat, Cäsiumhexafluorsilikat oder deren Gemische verwendet.

3. Verfahren nach Anspruch 1 oder 2, **dadurch gekennzeichnet, dass** man das Alkalimetallfluorsilikat mit einem Flächengewicht von 30 bis 60 g/m² aufbringt.

4. Verfahren nach Anspruch 1, **dadurch gekennzeichnet, dass** man das Aluminium oder die Aluminiumlegierung auf eine Temperatur im Bereich von 540 bis 610 °C aufheizt, um die Aluminium-Silicium-Legierung auszubilden.

5. Verfahren nach Anspruch 1 bis 4, **dadurch gekennzeichnet, dass** man zur Beschichtung ein Gemisch bestehend aus 99 bis 85 Gew.-% Alkalifiuorsilikat und 1 bis 15 Gew.-% Alkalifluoraluminat, wobei Alkali für K oder Cs steht, verwendet.

6. Verfahren nach Anspruch 5, **dadurch gekennzeichnet dass** ein Gemisch bestehend aus 99 bis 90 Gew.-% Alkalifluorsilikat und 1 bis 10 Gew.-% Alkalifluoraluminat, wobei Alkali für K oder Cs steht, verwendet wird.

## Claims

1. Process for manufacturing aluminium or an aluminium alloy with a coating containing an aluminium-silicon alloy, where aluminium or an aluminium alloy is coated and heated with a mixture consisting of 99.5% to 85% by weight alkali fluorosilicate and 0.5% to 15% by weight alkali fluoroaluminate until the aluminium-silicon alloy forms.

2. Process as claimed in Claim 1, **characterised in that**, potassium hexafluorosilicate, caesium hexafluorosilicate or a mixture of the two is used.

3. Process as claimed in Claim 1 or 2, **characterised in that**, the alkali metal fluorosilicate is applied with a basis weight of 30 to 60 g/m³.

4. Process as claimed in Claim 1, **characterised in that**, the aluminium or aluminium alloy is heated to a temperature in the range of 540 to 610°C to form the aluminium-silicon alloy.

5. Process as claimed in Claims 1 to 4, **characterised in that**, a mixture of 99% to 85% by weight alkali fluorosilicate and 1% to 15% by weight alkali fluoroaluminate, where alkali can be K or Cs, is used for the coating.

6. Process as claimed in Claim 5, **characterised in that**, a mixture of 99% to 90% by weight alkali fluorosilicate and 1% to 10% by weight alkali fluoroaluminate, where alkali can be K or Cs, is used for the coating.

## Revendications

1. Procédé de fabrication d'aluminium ou d'un alliage d'aluminium avec un revêtement en alliage d'aluminium au silicium, dans lequel on dépose sur l'aluminium ou un alliage d'aluminium un mélange constitué de 99,5 à 85 % en poids de fluorosilicate alcalin et 0,5 à 15 % en poids de fluoroaluminate alcalin, et chauffe jusqu'à la formation de l'alliage d'aluminium au silicium.

2. Procédé de la revendication 1 dans lequel on utilise de l'hexafluorosilicate de potassium, de l'hexafluorosilicate de césium ou leurs composés.

3. Procédé de la revendication 1 ou 2 dans lequel on applique le fluorosilicate de métal alcalin à raison de 30 à 60 g/m².

4. Procédé de la revendication 1 dans lequel l'aluminium ou l'alliage d'aluminium est chauffé à une température comprise entre 540 et 610 °C pour former l'alliage d'aluminium au silicium.

5. Procédé des revendications 1 à 4 dans lequel on utilise pour le revêtement un mélange constitué de 99 à 85 % en poids de fluorosilicate de métal alcalin et 1 à 15 % en poids de fluoroaluminate de métal alcalin, le métal alcalin étant ici K ou Cs.

6. Procédé de la revendication 5 dans lequel est utilisé un mélange constitué de 99 à 90 % en poids de fluorosilicate de métal alcalin et 1 à 10 % en poids de fluoroaluminate de métal alcalin, le métal alcalin étant ici K ou Cs.
